# FASCICULE DE BREVET EUROPEEN

(11) **EP 1 394 719 B1**
(45) Date de publication et mention de la délivrance du brevet: **30.05.2007**
(21) Numéro de dépôt: 02078606.7
(22) Date de dépôt: 02.09.2002
(51) Int. Cl.: G06K 7/00

(54) **Ajustement des paramètres de détection, d'émission et/ou de réception d'un lecteur RFID en fonction du bruit électromagnétique ambiant**
Anpassung der Sende- und Empfangseigenschaften eines RFID Lesers in Abhängigkeit vom elektromagnetischen Umgebungsrauschen
Adaptation of the transmission and receiving characteristic of a RFID reader dependent on the electromagnetic background noise

(43) Date de publication de la demande: 03.03.2004
(73) Titulaire: EM Microelectronic-Marin SA, 2074 Marin (CH)
(72) Inventeur: Desjeux, Olivier, 2525 Le Landeron (CH); Neveux, Laurent, 98000 Monaco (MC); Dertadian, Saak, 06200 Nice (FR)
(74) Mandataire: Laurent, Jean

(56) Documents cités:
- WO-A-01/15070
- WO-A-02/41029
- DE-A- 19 847 135
- US-A- 5 134 720

## Description

La présente invention se rapporte de manière générale à un système d'identification électronique radiofréquence (ou système RFID) comprenant au moins un lecteur radiofréquence et une antenne associée au lecteur radiofréquence pour produire un champ d'interrogation traversé par des transpondeurs à identifier. La présente invention se rapporte plus particulièrement à un procédé d'ajustement des paramètres de détection, d'émission et/ou de réception du lecteur radiofréquence d'un tel système en fonction du bruit électromagnétique ambiant.

II est connu du document DE 198 47 135 un système de communication entre un lecteur et un transpondeur dans lequel le lecteur comprend des moyens de mesure du bruit environnant pour régler un filtre adaptatif. Plus précisément, ces moyens de mesure sont agencés pour déterminer les fréquences parasites du bruit environnant, ces fréquences parasites étant filtrées en fonction de leurs amplitudes respectives lors de la réception suivante d'une réponse du transpondeur. Ce système se limite donc à filtrer un signal reçu en fonction du bruit environnant avant de démoduler ce signal.

Dans un contexte de logistique industrielle, les lecteurs RFID sont munis d'antennes de très grandes dimensions, ce qui confère à l'ensemble une très grande sensibilité qui est nécessaire pour obtenir les performances requises pour ce genre d'applications. Le contexte de logistique industrielle est caractérisé, d'une part, par un bruit électromagnétique ambiant souvent d'amplitude et de distribution variable et, d'autre part, par une multiplicité de lecteurs proches les uns des autres. Ces deux caractéristiques impliquent que chaque lecteur doit émettre avec une amplitude de champ aussi faible que possible de façon à interférer le moins possible avec les autres lecteurs mais également avec un niveau d'amplitude suffisamment important pour s'affranchir du bruit électromagnétique ambiant. On notera encore que le rapport signal sur bruit dans cet environnement est variable en fonction de l'activité perturbatrice externe (moteurs, néons, commutations, etc.) et en fonction de l'activité des lecteurs proches.

On comprendra qu'un lecteur réglé de façon permanente pour répondre aux conditions contradictoires susmentionnées ne constituera pas une solution optimale car, compte tenu du caractère variable du bruit électromagnétique ambiant, ce lecteur sera soit trop sensible au bruit électromagnétique ambiant ou trop perturbateur pour les autres lecteurs proches. Une solution est donc nécessaire pour optimiser en tout temps les caractéristiques de détection, d'émission et/ou de réception du système. La présente invention a pour but de proposer une telle solution.

La présente invention a ainsi pour objet un procédé d'ajustement des paramètres de détection, d'émission et/ou de réception d'un lecteur radiofréquence d'un système d'identification électronique radiofréquence dont les caractéristiques sont énoncées dans la revendication 1.

La présente invention a également pour objet un système d'identification électronique pour la mise en oeuvre de ce procédé.

Des modes de réalisation avantageux de l'invention font l'objet des revendications dépendantes.

Selon l'invention, il est donc proposé un procédé d'ajustement des paramètres de détection, d'émission et/ou de réception (ou paramètres de réglage) d'un lecteur radiofréquence en fonction du bruit électromagnétique ambiant. Ce procédé comporte au moins une étape de mesure, par le lecteur radiofréquence, du niveau du bruit électromagnétique ambiant, une étape de mesure additionnelle qui consiste en une mesure par le lecteur radiofréquence de la réponse d'un transpondeur de référence placé au moins temporairement (soit en permanence ou à chaque fois qu'un ajustement des paramètres du lecteur est nécessaire) dans le champ d'interrogation de l'antenne associée au lecteur radiofréquence, ce transpondeur de référence présentant des caractéristiques analogues aux caractéristiques des transpondeurs devant être identifiés par le système, et une étape d'ajustement des paramètres de détection, d'émission et/ou de réception du lecteur radiofréquence sur la base du niveau du bruit électromagnétique ambiant et de la réponse du transpondeur de référence mesurés par le lecteur.

Plus particulièrement, l'étape de mesure du bruit électromagnétique ambiant permet un réglage de la sensibilité du lecteur à ce bruit. Ceci est préférablement et avantageusement réalisé par le biais d'un ajustement d'un seuil de détection de modulation du lecteur, c'est-à-dire un seuil permettant la détection de la modulation transmise par le transpondeur en guise de réponse. Cette étape de mesure du bruit électromagnétique ambiant permet également, le cas échéant, d'interdire le fonctionnement du lecteur, d'afficher un message d'erreur ou de reprendre le fonctionnement ultérieurement dans l'éventualité où le niveau du bruit électromagnétique ambiant est trop important. L'étape de mesure additionnelle de la réponse du transpondeur de référence permet de régler les gains en émission et en réception du lecteur radiofréquence de sorte que le rapport signal sur bruit soit optimisé au moment de la lecture ou écriture du transpondeu r.

D'autres caractéristiques et avantages de la présente invention apparaîtront plus clairement à la lecture de la description détaillée qui suit, faite en référence aux dessins annexés donnés à titre d'exemples non limitatifs et dans lesquels :
- la figure 1 est une représentation schématique d'un système d'identification électronique radiofréquence comprenant notamment un lecteur radiofréquence et une antenne associée ;
- la figure 2 est un diagramme schématique de l'architecture du lecteur radiofréquence de la figure 1 montrant les éléments fonctionnels principaux de ce lecteur ; et
- la figure 3 est un diagramme d'évolution dans le temps illustrant un exemple représentatif du bruit électromagnétique ambiant et d'un réglage possible d'un seuil de détection permettant de s'affranchir de l'influence du bruit ambiant et détecter une modulation générée par un transpondeur.

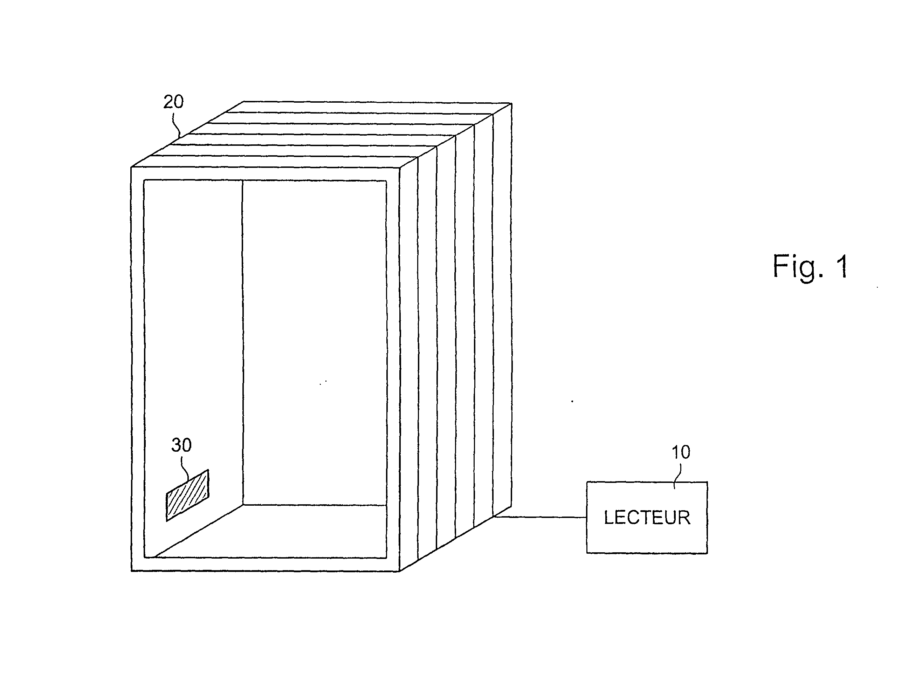

La figure 1 est une illustration schématique d'un système d'identification électronique radiofréquence, ou système RFID, comprenant notamment un lecteur radiofréquence 10 et une antenne associée 20. Cette antenne 20 est une antenne de grand volume (un volume représentatif est par exemple de l'ordre de 1.2 x 2.4 x 2 m³) constituée essentiellement d'un cadre et d'un solénoïde formé autour de ce cadre. Le lecteur radiofréquence 10 est connecté électriquement à cette antenne 20 pour que cette dernière produise un champ électromagnétique d'interrogation essentiellement confiné dans le volume définit par le cadre de l'antenne 20 et au travers duquel sont amenés les divers transpondeurs à identifier (non représentés ici). Idéalement, on tâchera d'utiliser une antenne dont la constitution et la géométrie est telle que la répartition du champ électromagnétique est essentiellement uniforme dans le volume de communication défini par cette antenne.

Selon un mode de réalisation préféré de l'invention, le cadre de l'antenne 20 porte (de manière permanente dans cet exemple) un transpondeur de référence 30 (ou transpondeur espion) dont l'identité est connue et dont la constitution présente des caractéristiques analogues aux caractéristiques des transpondeurs à identifier, c'est-à-dire un transpondeur qui, lors de son interrogation, produit une réponse connue dont les caractéristiques (en termes d'amplitude de modulation notamment) sont analogues voire identiques aux caractéristiques des réponses produites par les transpondeurs utilisés dans l'environnement logistique où est implanté le système d'identification. On reviendra ultérieurement plus en détail sur l'utilité de ce transpondeur de référence 30. On mentionnera encore, qu'au titre d'alternative à une installation permanente du transpondeur de référence 30 sur l'antenne 20, ce transpondeur de référence pourrait être amené périodiquement dans le volume de communication de l'antenne, par exemple avant chaque arrivée d'un groupe de transpondeurs à identifier.

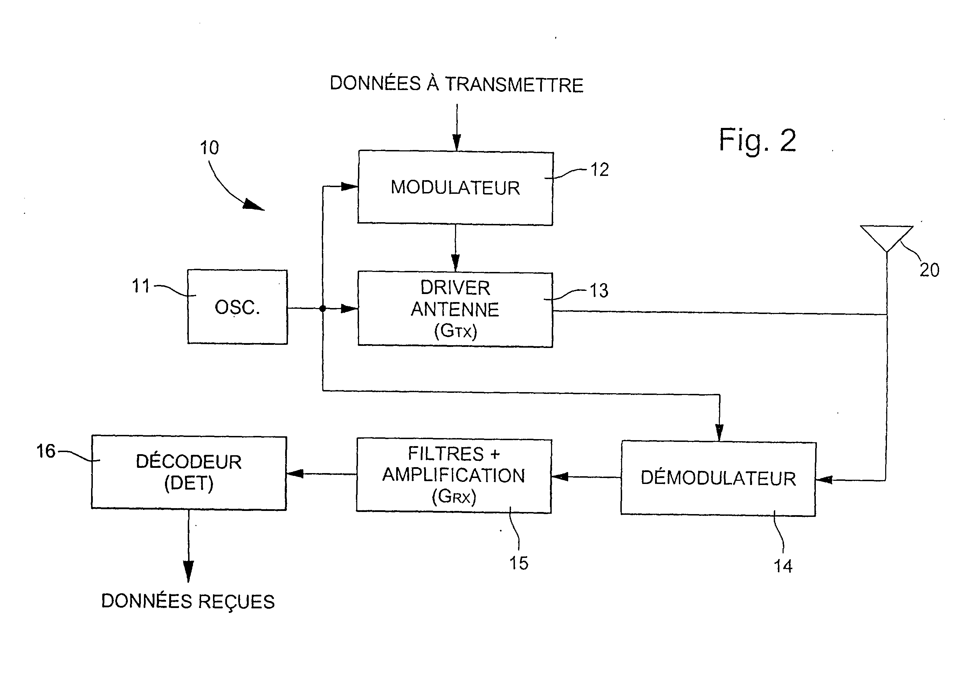

La figure 2 illustre plus en détail l'architecture fonctionnelle du lecteur radiofréquence 10 de la figure 1. Ce lecteur 10 comporte ainsi typiquement un moyen d'horloge 11 pour délivrer un signal d'horloge assurant notamment le cadencement des opérations de modulation et de démodulation des signaux électromagnétiques émis et reçus, un circuit de modulation 12 pour générer une modulation adéquate du champ électromagnétique en fonction de données à transmettre, un circuit d'amplification et de commande 13 pour attaquer l'antenne 20, un circuit de démodulation 14 pour assurer la démodulation des réponses modulées transmises par les transpondeurs et captées par l'antenne 20, un circuit d'amplification et de filtrage 15 des signaux produits en sortie du circuit de démodulation 14 et enfin un circuit de décodage 16 des signaux démodulés, amplifiés et filtrés.

On ne s'attardera pas ici sur la structure détaillée du lecteur radiofréquence 10. On mentionnera simplement que ce lecteur présente typiquement divers paramètres de réglage sur lesquels il est possible d'agir pour influer sur les caractéristiques d'émission et de réception du lecteur ainsi que sur la fonction de détection de modulation du lecteur. En particulier, le circuit de décodage 16 présente un paramètre de réglage permettant d'influer sur le décodage des signaux reçus. Il s'agit en l'espèce d'un seuil dit de détection de modulation (désigné DET) permettant de détecter les changements d'état d'un signal reçu pour en décoder la signification est extraire les données transmises. Ce seuil de détection de modulation DET constitue un paramètre de réglage qui est typiquement présent et requis lors du décodage des signaux reçus, et ce quelque soit le type de modulation (en amplitude, en phase, en fréquence, ...) utilisé.

On notera qu'il est également possible d'influer sur les caractéristiques d'émission du lecteur, c'est-à-dire notamment l'amplitude du champ électromagnétique produit, en jouant sur les paramètres de réglages du circuit d'amplification et de commande 13 de l'antenne, à savoir notamment un gain en émission, désigné G_{Tx}, de ce circuit d'amplification 13. Il en va de même en ce qui concerne les caractéristiques de réception du lecteur en jouant sur les paramètres de réglages du circuit d'amplification et de filtrage 15, à savoir notamment un gain en réception, désigné G_{Rx}, de ce circuit 15, voire les paramètres de filtrage des filtres utilisés.

Dans le système d'identification électronique susmentionné, il est ainsi possible d'ajuster les paramètres de détection, d'émission et/ou de réception du lecteur radiofréquence en fonction du bruit électromagnétique ambiant. En particulier, le processus d'ajustement consiste en premier lieu en une mesure du niveau du bruit électromagnétique ambiant (sans qu'un quelconque transpondeur se trouvant dans le champ électromagnétique de l'antenne ne soit activé) au moyen du lecteur, suivie par un ajustement des paramètres de réglage du lecteur en fonction du niveau mesuré du bruit électromagnétique ambiant. Préférablement, cette étape d'ajustement consiste à ajuster le seuil de détection de modulation du lecteur (ou plus exactement le seuil de détection de modulation DET du circuit de décodage 16 de la figure 2) pour être supérieur au niveau moyen mesuré du bruit électromagnétique ambiant.

La mesure du niveau du bruit électromagnétique ambiant peut consister simplement en un échantillonnage du signal capté par l'antenne, durant une période de temps déterminée où aucun transpondeur ne module le champ électromagnétique produit par l'antenne. Cet échantillonnage permet notamment de déterminer le niveau moyen, la distribution et le degré de variabilité du bruit électromagnétique ambiant et fournit ainsi une première mesure des conditions dans lesquelles le systèmes doit opérer. En particulier, cet échantillonnage permet, comme déjà mentionné, de fixer le niveau du seuil de détection de modulation du lecteur afin que ce dernier présente une forte insensibilité au bruit électromagnétique ambiant.

Dans le cas préféré d'une adjonction du transpondeur de référence mentionné plus haut (élément 30 dans la figure 1), on procède en outre à une mesure du niveau de la réponse produite par ce transpondeur de référence suite à une interrogation par le lecteur. Compte tenu du fait que le niveau de la réponse du transpondeur dépend des caractéristiques de ce dernier (et qui sont par ailleurs représentatives des caractéristiques des transpondeurs utilisés avec ce système d'identification), cette mesure permet, d'une part, une vérification que le système peut opérer correctement compte tenu du niveau du bruit électromagnétique ambiant et du réglage requis du seuil de détection de modulation DET et, d'autre part, d'identifier la nécessité éventuelle d'ajuster les paramètres d'émission et/ou de réception du lecteur radiofréquence (à savoir notamment agir sur les gains G_{Tx}, G_{Rx} des circuits d'amplification du lecteur radiofréquence).

Les mesures prises ci-dessus ont ainsi pour but d'ajuster au mieux les paramètres de réglage du lecteur radiofréquence afin que les échanges subséquents avec les transpondeurs à identifier se déroulent de la manière la plus optimale qui soit. Dans des cas extrêmes, ces mesures permettent le cas échéant d'interdire le fonctionnement ultérieur du lecteur, d'en reporter l'exécution et/ou d'en aviser l'opérateur (par exemple dans le cas où la mesure du niveau de la réponse du transpondeur de référence montre que le niveau du bruit électromagnétique ambiant et/ou du seuil de détection de modulation est trop important pour permettre un fonctionnement adéquat du système d'identification).

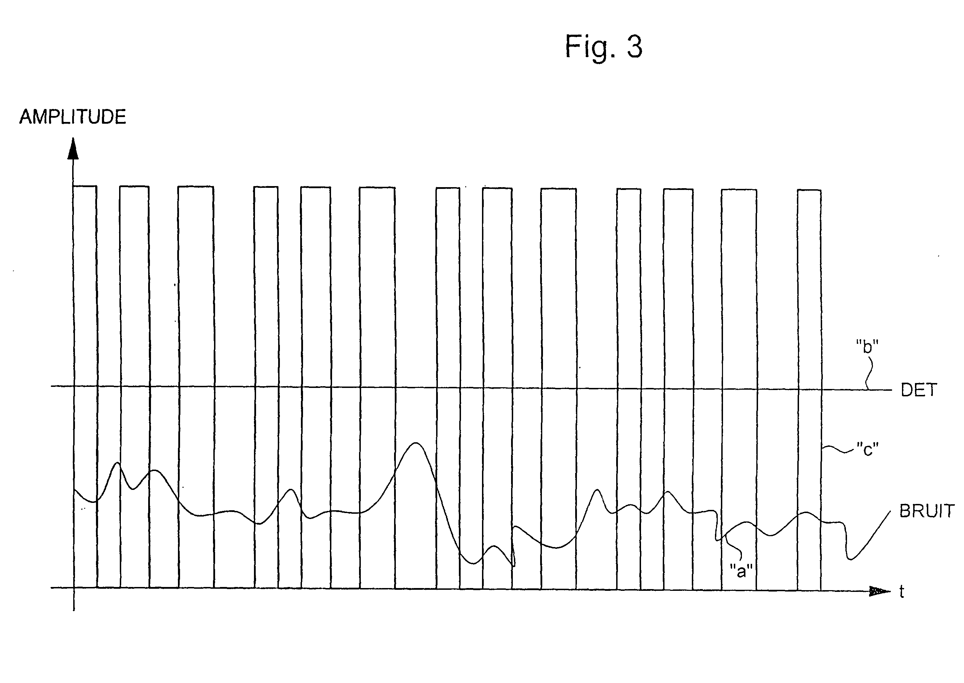

La figure 3 permet de mieux illustrer le principe de mise en oeuvre de la présente invention. La courbe « a » dans le diagramme de la figure 3 montre, sur une période de temps déterminé, une évolution représentative du bruit électromagnétique ambiant au cours du temps. La courbe horizontale « b » illustre un réglage possible du seuil de détection de modulation DET mentionné plus haut. Il est clair que plusieurs réglages sont possibles. Un réglage possible pourrait par exemple consister en un ajustement du seuil de détection de modulation de sorte que celui-ci soit supérieur, d'un facteur déterminé, au niveau moyen du bruit électromagnétique ambiant ou, alternativement, soit supérieur au niveau maximal du bruit électromagnétique ambiant. Un ajustement du seuil de détection de modulation à un niveau aussi bas que possible est préférable. Il est toutefois clair que plus ce seuil est bas, plus le lecteur est sensible au bruit électromagnétique ambiant et, à l'opposé, que plus ce seuil est haut, plus il sera nécessaire d'augmenter la puissance d'émission et/ou de réception du lecteur (notamment par le biais d'une augmentation du gain en émission G_{Tx} du lecteur).

En référence à la figure 3, on notera enfin que la courbe « c » est représentative d'une modulation produite par un transpondeur (par exemple le transpondeur de référence de la figure 1) et captée par l'antenne, et que le niveau d'amplitude de cette modulation (plus exactement, le niveau maximal du signal reçu) doit être suffisamment supérieur au seuil de détection de modulation DET pour que le décodage des données transmises puisse être opéré de la manière la plus optimale qui soit. On comprendra qu'une augmentation du gain en émission du lecteur radiofréquence permet d'accroître le rapport signal sur bruit du signal reçu. Outre le niveau du signal reçu, une modification du gain en réception influe également sur le niveau du bruit électromagnétique ambiant et nécessite donc éventuellement à nouveau une modification du niveau du seuil de détection de modulation DET.

On notera encore que l'ajustement des paramètres du lecteur radiofréquence peut être opéré avec un certain degré de liberté dans une gamme d'ajustement déterminée essentiellement par les caractéristiques électriques des composants du lecteur. On comprendra en particulier que la saturation des circuits d'amplification limite les possibilités d'ajustement des gains en émission et en réception du lecteur radiofréquence.

Le processus d'ajustement des divers paramètres de réglage du lecteur peut ainsi être répété à plusieurs reprises pour affiner et optimiser le fonctionnement du lecteur. Les étapes de mesure et d'ajustement mentionnées plus haut sont ainsi préférablement répétées de manière itérative pour atteindre un optimum.

Alternativement, plusieurs réglages des paramètres de détection, d'émission et/ou de réception du lecteur radiofréquence peuvent être pré-établis et sélectionnés en fonction du niveau mesuré du bruit électromagnétique ambiant et, le cas échéant, de la réponse mesurée du transpondeur de référence.

On comprendra finalement que diverses modifications et/ou améliorations évidentes pour l'homme du métier peuvent être apportées aux modes de réalisation décrits dans la présente description sans sortir du cadre de l'invention défini par les revendications annexées. En particulier, comme déjà mentionné, le transpondeur de référence préférablement utilisé pour calibrer les gains en émission et/ou en réception du lecteur peut, comme alternative à une disposition permanente dans le champ d'interrogation de l'antenne, être placé dans le champ de l'antenne uniquement à chaque fois qu'un ajustement du système est requis.

## Revendications

1. Procédé d'ajustement des paramètres de détection, d'émission et/ou de réception (DET, G_{Tx}, G_{Rx}) d'un lecteur radiofréquence en fonction du bruit électromagnétique ambiant, dans un système d'identification électronique radiofréquence (RFID) comprenant au moins le lecteur radiofréquence (10) et une antenne (20) associée au dit lecteur radiofréquence pour produire un champ d'interrogation traversé par des transpondeurs à identifier, ledit procédé comprenant :
une étape de mesure par le lecteur radiofréquence (10) du niveau du bruit électromagnétique ambiant ;
ce procédé étant **caractérisé en ce qu'**il comporte au moins :
une étape de mesure par le lecteur radiofréquence (10) de la réponse d'un transpondeur de référence (30) placé au moins temporairement dans le champ d'interrogation de l'antenne (20) associée au lecteur radiofréquence, ce transpondeur de référence (30) présentant des caractéristiques analogues aux caractéristiques des transpondeurs à identifier; et
une étape d'ajustement desdits paramètres de détection, d'émission et/ou de réception du lecteur radiofréquence (10, DET, G_{Tx}, G_{Rx)}) sur la base du niveau du bruit électromagnétique ambiant et de la réponse dudit transpondeur de référence mesurés par ledit lecteur.

2. Procédé selon la revendication 1, **caractérisé en ce que** ledit transpondeur de référence (30) est placé en permanence dans le champ d'interrogation de l'antenne (20) du lecteur radiofréquence (10).

3. Procédé selon la revendication 1, **caractérisé en ce que** ledit transpondeur de référence (30) est placé dans le champ d'interrogation de l'antenne (20) du lecteur radiofréquence (10) avant chaque ajustement des paramètres d'émission et/ou de réception du lecteur radiofréquence.

4. Procédé selon l'une des revendications précédentes, **caractérisé en ce que** lesdits paramètres de détection, d'émission et/ou de réception du lecteur radiofréquence incluent notamment un seuil de détection de modulation (DET), ce seuil de détection de modulation (DET) étant ajusté durant ladite étape d'ajustement pour être supérieur au niveau moyen mesuré du bruit électromagnétique ambiant et de sorte que la détection de la réponse transmise par ledit transpondeur de référence (30) soit essentiellement insensible au bruit électromagnétique ambiant.

5. Procédé selon la revendication 4, **caractérisé en ce que** lesdits paramètres de détection, d'émission et/ou de réception du lecteur radiofréquence incluent en outre un gain d'émission (G_{Tx}) et/ou de réception (G_{Rx}) du lecteur radiofréquence (10).

6. Procédé selon l'une quelconque des revendications précédentes, **caractérisé en ce que** lesdites étapes de mesure et d'ajustement sont répétées de manière itérative pour atteindre un optimum.

7. Procédé selon l'une quelconque des revendications 2 à 5, **caractérisé en ce que** plusieurs réglages des paramètres de détection, d'émission et/ou de réception du lecteur radiofréquence sont pré-établis et **en ce que** ladite étape d'ajustement consiste en une sélection de l'un desdits réglages pré-établis en fonction du niveau mesuré du bruit électromagnétique ambiant et de la réponse mesurée dudit transpondeur de référence.

8. Procédé selon la revendication 5, **caractérisé en ce qu'**il comporte un déroulement chronologique des étapes suivantes :
a) mesure du niveau du bruit électromagnétique ambiant ;
b) ajustement du seuil de détection de modulation du lecteur radiofréquence sur la base du niveau mesuré du bruit électromagnétique ambiant ;
c) activation du transpondeur de référence afin qu'il transmettre temporairement et en continu une réponse ;
d) mesure du niveau de la réponse transmise par le transpondeur de référence ; et
e) ajustement des gains d'émission et/ou de réception du lecteur radiofréquence en fonction du niveau mesuré de la réponse du transpondeur de référence.

9. Système d'identification électronique radiofréquence (RFID) pour la mise en oeuvre du procédé selon l'une quelconque des revendications précédentes, comprenant au moins un lecteur radiofréquence (10), une antenne associée (20) au lecteur radiofréquence pour la production d'un champ d'interrogation traversé par des transpondeurs à identifier, ledit lecteur radiofréquence (10) étant muni de moyens pour mesurer le niveau du bruit électromagnétique ambiant, ce système comportant en outre un transpondeur de référence (30) placé au moins temporairement dans le champ d'interrogation de l'antenne (20) du lecteur radiofréquence (10) pour permettre une mesure comparative entre le niveau du bruit électromagnétique ambiant capté par l'antenne (20) et le niveau de la réponse transmise par ledit transpondeur de référence (30).

## Claims

1. Method for adjusting detection, transmission and/or reception parameters of a radiofrequency reader as a function of ambient electromagnetic noise in an electronic radiofrequency identification system (RFID) including at least the radiofrequency reader (10) and an antenna (20) associated with said radiofrequency reader for generating an interrogation field through which transponders to be identified pass, said method including :
a step of measuring a level of ambient electromagnetic noise by means of the radiofrequency reader (10) ;
this method being **characterized in that** it at least includes:
a step of measuring, by means of the radiofrequency reader (10) of the response of a reference transponder (30) placed, at least temporarily, in the interrogation field of the antenna (20) associated with the radiofrequency reader, said reference transponder (30) having similar characteristics to the characteristics of the transponders to be identified ; and
a step of adjusting said detection, transmission and/or reception parameters of the radiofrequency reader (10, DET, G_{TX}, G_{RX}) on the basis of the level of ambient electromagnetic noise and of the response of the reference transponder measured by said reader.

2. Method according to claim 1, **characterized in that** said reference transponder (30) is permanently placed in the interrogation field of the antenna of the radiofrequency reader (10).

3. Method according to claim 1, **characterized in that** said reference transponder (30) is placed in the interrogation field of the antenna (20) of the radiofrequency reader (10) before each adjustment of the transmission and/or reception parameters of the radiofrequency reader.

4. Method according to any of the preceding claims, **characterized in that** said detection, transmission and/or reception parameters of the radiofrequency reader include in particular a modulation detection threshold (DET), said modulation detection threshold (DET) being adjusted during said adjustment step to make it higher than the mean measured level of ambient electromagnetic noise and such that detection of the response transmitted by said reference transponder (30) is essentially insensitive to the ambient electromagnetic noise.

5. Method according to claim 4, **characterized in that** said detection, transmission and/or reception parameters of the radiofrequency reader further include a transmission (G_{TX}) or reception (G_{RX}) gain of the radiofrequency reader (10).

6. Method according to any one of the preceding claims, **characterized in that** said measurement and adjustment steps are repeated iteratively to achieve an optimum result.

7. Method according to any one of claims 2 to 5, **characterized in that** several settings of the detection, transmission and/or reception parameters of the radiofrequency reader are pre-established and **in that** said adjustment step consists in a selection of one of said pre-established settings as a function of the measured level of ambient electromagnetic noise and the measured response of said reference transponder.

8. Method according to claim 5, including a chronological sequence of the following steps :
a) measurement of the level of ambient electromagnetic noise ;
b) adjustment of the modulation detection threshold of the radiofrequency reader on the basis of the measured ambient electromagnetic noise level ;
c) activation of the reference transponder so that it temporarily and continuously transmits a response ;
d) measurement of the level of the response transmitted by the reference transponder ; and
e) adjustment of the transmission and/or reception gains of the radiofrequency reader as a function of the measured level of the response of the reference transponder.

9. Electronic radiofrequency identification system (RFID) for the implementation of the method according to any one of the preceding claims, including at least a radiofrequency reader (10), an antenna (20) associated with said radiofrequency reader for generating an interrogation field through which transponders to be identified pass, said radiofrequency reader (10) comprising means for measuring the level of the ambient electromagnetic noise, this method including at least a reference transponder (30) placed, at least temporarily, in the interrogation field of the antenna (20) of the radiofrequency reader (10) for allowing a comparative measurement between the level of the ambient electromagnetic noise detected by the antenna and the level of the response transmitted by the reference transponder.

## Patentansprüche

1. Verfahren zum Anpassen von Erfassungs-, Sende- und/oder Empfangsparametern (DET, G_{Tx}, G_{Rx}) eines Hochfrequenzlesers in Abhängigkeit vom elektromagnetischen Umgebungsrauschen in einem elektronischen Hochfrequenz-Identifizierungssystem (RFID), das wenigstens den Hochfrequenzleser (10) und eine dem Hochfrequenzleser zugeordnete Antenne (20) umfasst, um ein Abfragefeld zu erzeugen, durch das zu identifizierende Transponder laufen, wobei das Verfahren umfasst:
einen Schritt des Messens des Pegels des elektromagnetischen Umgebungsrauschens mittels des Hochfrequenzlesers (10); wobei dieses Verfahren **dadurch gekennzeichnet ist, dass** es wenigstens umfasst:
einen Schritt des Messens der Antwort eines Referenz-Transponders (30), der wenigstens vorübergehend im Abfragefeld der dem Hochfrequenzleser zugeordneten Antenne (20) angeordnet ist, mittels des Hochfrequenzlesers (10), wobei dieser Referenz-Transponder (30) Charakteristiken besitzt, die zu den Charakteristiken der zu identifizierenden Transponder analog sind; und
einen Schritt des Anpassens der Erfassungs-, Sende- und/oder Empfangsparameter (10, DET, G_{Tx}, G_{Rx}) auf der Grundlage des Pegels des elektromagnetischen Umgebungsrauschens und der Antwort des Referenz-Transponders, die von dem Leser gemessen werden.

2. Verfahren nach Anspruch 1, **dadurch gekennzeichnet, dass** der Referenz-Transponder (30) ständig in dem Abfragefeld der Antenne (20) des Hochfrequenzlesers (10) angeordnet ist.

3. Verfahren nach Anspruch 1, **dadurch gekennzeichnet, dass** der Referenz-Transponder (30) vor jeder Anpassung der Sende- und/oder Empfangsparameter des Hochfrequenzlesers in dem Abfragefeld der Antenne (20) des Hochfrequenzlesers (10) angeordnet wird.

4. Verfahren nach einem der vorhergehenden Ansprüche, **dadurch gekennzeichnet, dass** die Erfassungs-, Sende- und/oder Empfangsparameter des Hochfrequenzlesers insbesondere einen Schwellenwert (DET) für die Erfassung der Modulation enthalten, wobei dieser Schwellenwert (DET) für die Erfassung der Modulation während des Anpassungsschrittes so angepasst wird, dass er höher als der gemessene mittlere Pegel des elektromagnetischen Umgebungsrauschens ist, und derart, dass die Erfassung der Antwort, die von dem Referenz-Transponder (30) gesendet wird, für das elektromagnetische Umgebungsrauschen im Wesentlichen unempfindlich ist.

5. Verfahren nach Anspruch 4, **dadurch gekennzeichnet, dass** die Erfassungs-, Sende- und/oder Empfangsparameter des Hochfrequenzlesers außerdem eine Sendeverstärkung (G_{TX}) und/oder eine Empfangsverstärkung (G_{RX}) des Hochfrequenzlesers (10) enthalten.

6. Verfahren nach einem der vorhergehenden Ansprüche, **dadurch gekennzeichnet, dass** die Mess- und Anpassungsschritte iterativ wiederholt werden, um ein Optimum zu erreichen.

7. Verfahren nach einem der Ansprüche 2 bis 5, **dadurch gekennzeichnet, dass** im Voraus mehrere Einstellungen der Erfassungs-, Sende- und/oder Empfangsparameter des Hochfrequenzlesers vorgenommen werden und dass der Anpassungsschritt in einer Auswahl einer der im Voraus ausgeführten Einstellungen in Abhängigkeit vom gemessenen Pegel des elektromagnetischen Umgebungsrauschens und der gemessenen Antwort des Referenz-Transponders besteht.

8. Verfahren nach Anspruch 5, **dadurch gekennzeichnet, dass** es einen zeitlichen Ablauf der folgenden Schritte umfasst:
a) Messen des Pegels des elektromagnetischen Umgebungsrauschens;
b) Anpassen des Schwellenwertes für die Erfassung der Modulation des Hochfrequenzlesers auf der Grundlage des gemessenen Pegels des elektromagnetischen Umgebungsrauschens;
c) Aktivieren des Referenz-Transponders, damit er vorübergehend und ununterbrochen eine Antwort sendet;
d) Messen des Pegels der von dem Referenz-Transponder gesendeten Antwort; und
e) Anpassen der Sende- und/oder Empfangsverstärkung des Hochfrequenzlesers in Abhängigkeit von dem gemessenen Pegel der Antwort des Referenz-Transponders.

9. Elektronisches Hochfrequenz-Identifizierungssystem (RFID) für die Ausführung des Verfahrens nach einem der vorhergehenden Ansprüche, das wenigstens einen Hochfrequenzleser (10) und eine dem Hochfrequenzleser zugeordnete Antenne (20) für die Erzeugung eines Abfragefeldes, durch das zu identifizierende Transponder laufen, umfasst, wobei der Hochfrequenzleser (10) mit Mitteln zum Messen des Pegels des elektromagnetischen Umgebungsrauschens versehen ist, wobei dieses System außerdem einen Referenz-Transponder (30) umfasst, der wenigstens vorübergehend in dem Abfragefeld der Antenne (20) des Hochfrequenzlesers (10) angeordnet wird, um eine Vergleichsmessung zwischen dem Pegel des elektromagnetischen Umgebungsrauschens, das von der Antenne (20) eingefangen wird, und dem Pegel der von dem Referenz-Transponder (30) gesendeten Antwort zu ermöglichen.
